# EUROPEAN PATENT SPECIFICATION

(11) **EP 3 061 992 B1**
(45) Date of publication and mention of the grant of the patent: **01.09.2021**
(21) Application number: 16157096.5
(22) Date of filing: 24.02.2016
(51) Int. Cl.: F16H 57/04, F16N 39/00, F01D 25/20

(54) **IN-LINE DEAERATOR DEVICE FOR WINDMILL-AUXILIARY OIL SYSTEM FOR FAN DRIVE GEAR SYSTEM**
INLINE-ENTLÜFTERVORRICHTUNG FÜR WINDMÜHLENHILFSÖLSYSTEM FÜR LÜFTERANTRIEBSSYSTEM
DISPOSITIF DE DÉGAZAGE EN LIGNE POUR SYSTÈME D'HUILE AUXILIAIRE D'ÉOLIENNE POUR SYSTÈME D'ENGRENAGE D'ENTRAÎNEMENT DE VENTILATEUR

(30) Priority: 24.02.2015 US 201514629834
(43) Date of publication of application: 31.08.2016
(73) Proprietor: Raytheon Technologies Corporation, Farmington, CT 06032 (US)
(72) Inventor: PARNIN, Francis, Suffield, CT Connecticut 06078 (US); SHERIDAN, William G., Southington, CT Connecticut 06489 (US); GROHOLSKI, John S., Hebron, CT Connecticut 06248 (US)
(74) Representative: Dehns

(56) References cited:
- EP-A2- 2 224 120
- EP-A2- 2 322 766
- JP-A- 2003 254 029
- JP-A- 2011 069 463
- JP-U- H 061 710
- US-A1- 2011 146 223
- None

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

A speed reduction device such as an epicyclical gear assembly may be utilized to drive the fan section such that the fan section may rotate at a speed different than the turbine section so as to increase the overall propulsive efficiency of the engine. In such engine architectures, a shaft driven by one of the turbine sections provides an input to the epicyclical gear assembly that drives the fan section at a reduced speed such that both the turbine section and the fan section can rotate at closer to optimal speeds.

The gear assembly requires lubrication to prevent premature wear of bearing surfaces. Accordingly, a lubrication system that includes a main pump and main reservoir is used during engine operation. However, when the engine is not operating, airflow through the fan may cause the gear assembly to rotate. Also, certain maneuvers with the engine operating may briefly interrupt the operation of the main system. An auxiliary system is therefore provided that utilizes lubricant drained from the gear assembly to maintain lubricant flow to the bearing surfaces when the main system is not operating. Drained lubricant may be aerated and therefore have a reduced effectiveness.

EP 2 322 766 A2 discloses a prior art lubrication system in accordance with the preamble of claim 1 and a prior art method of designing a lubrication system in accordance with the preamble of claim 12.

JP H06 1710 U discloses a prior art deaerator.

### SUMMARY

According to a first aspect of the present invention, there is provided a lubrication system as set forth in claim 1.

In an embodiment of the above, the deaerator includes a first outlet for lubricant disposed radially outside of a second outlet for gas.

In a further embodiment of any of the above, the second outlet includes a vent that extends radially out of the deaerator to exhaust gas.

In a further embodiment of any of the above, the vane section includes a plurality of vanes extending radially outward transverse to a direction of lubricant flow for inducing a radial component to lubricant flow.

In a further embodiment of any of the above, the deaerator includes a conduit including a chamber between the vane section and the first outlet and the second outlet. The radial flow component is induced by the vane section drives the lubricant against the inner walls of the chamber leaving the gas spaced apart from the inner walls.

In a further embodiment of any of the above, the radial flow in the lubricant includes a swirl that drives heavier lubricant against inner walls of the deaerator and leaves the gas to flow about a central line of the conduit.

In a further embodiment of any of the above, a gutter capturing lubricant exhausted from the fan drive gear system, the gutter in communication with the auxiliary pump through the deaerator.

In a further embodiment of any of the above, a bearing supports at least one gear of the fan drive gear system. The bearing is in communication with an outlet of the auxiliary pump to receive lubricant.

In a further embodiment of any of the above, a mechanical link between a portion of the fan drive gear system and the auxiliary pump for driving the auxiliary pump.

In a further embodiment of any of the above, a valve assembly for directing lubricant from the auxiliary pump to at least one bearing in response to a reduction in lubricant flow from a main lubricant system below a predetermined flow rate.

According to a further aspect of the present invention, there is provided a gas turbine engine as set forth in claim 8.

In one exemplary embodiment, the deaerator includes a first outlet for lubricant disposed radially outside of a second outlet for gas.

In a further embodiment of the above, the second outlet includes a vent that extends radially out of the deaerator to exhaust gas.

In a further embodiment of the above, a bearing supports at least one gear of the geared architecture. The bearing is in communication with an outlet of the auxiliary pump to receive lubricant.

According to a further aspect of the present invention, there is provided a method of designing a lubrication system as set forth in claim 12.

In one exemplary embodiment, a deaerator is defined to include a first outlet for lubricant disposed radially outside of a second outlet for gas. The second outlet is configured to include a vent that extends radially out of the deaerator to exhaust gas.

In a further embodiment of any of the above, the deaerator is configured to define a conduit including a chamber between the vane section and the first outlet and the second outlet. A radial flow component induced by the vane section drives the lubricant against the inner walls of the chamber leaving the gas spaced apart from the inner walls.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a schematic view of an example lubrication system for a fan drive gear system.
Figure 3 is a schematic view of an example de-aerator embodiment for removing air from lubricant.
Figure 4 is a schematic view of a vane section of the example de-aerator of Figure 3.
Figure 5 is a schematic view of an outlet section of the example de-aerator of Figure 3.

### DETAILED DESCRIPTION

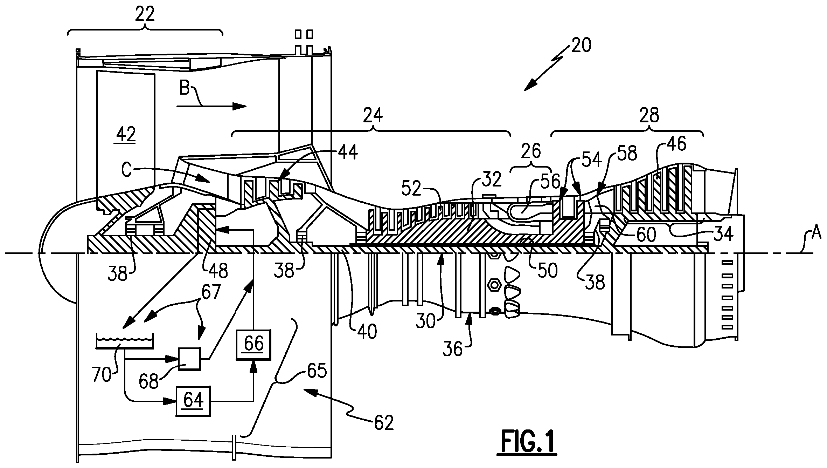

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B, while the compressor section 24 drives air along a core flow path C. Air passing through the core flow path C is compressed and communicated to the combustor section 26 where the compressed air is mixed with fuel and ignited to produce a high energy flow that expands through the turbine section 28.

Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3:1 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle.

The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10.67 km). The flight condition of 0.8 Mach and 35,000 ft (10.67 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]0.5. The "Low corrected fan tip speed" as disclosed herein according to one non-limiting embodiment is less than about 1150 ft/second (350 m/second).

The example gas turbine engine includes the fan 42 that comprises in one non-limiting embodiment less than about twenty-six (26) fan blades. In another non-limiting embodiment, the fan section 22 includes less than about twenty (20) fan blades. Moreover, in one disclosed embodiment the low pressure turbine 46 includes no more than about six (6) turbine rotors schematically indicated at 34. In another non-limiting example embodiment the low pressure turbine 46 includes about three (3) turbine rotors. A ratio between the number of fan blades 42 and the number of low pressure turbine rotors is between about 3.3:1 and about 8.6:1. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

A lubrication system 62 is provided in the gas turbine engine 20 to provide lubrication to at least one bearing surface. The lubrication system 62 provides lubricant to the geared architecture 48 and includes a main lubrication system 65 and an auxiliary lubrication system 67. The main lubrication system 65 includes a main lubricant pump 66 that draws lubricant from a main reservoir 64 to provide lubricant flow to the geared architecture 48 during engine operation. The main lubricant system 65 provides lubricant flow to the engine 20 when it is operating normally. In some instances, the engine 20 may not be operating or may be operating at a condition where lubricant flow through the main lubrication system 65 is not providing lubricant flow above a desired threshold value. Accordingly, the auxiliary lubrication system 67 is provided to supplement lubricant flow to the bearing surfaces during engine operating conditions where the main lubricant system 65 is not providing sufficient flow.

The auxiliary lubricant system 67 includes an auxiliary pump 68 that draws lubricant from a gutter 70. The gutter 70 captures oil that is exhausted from other bearing assemblies or the geared architecture 48 as is shown schematically in Figure 1.

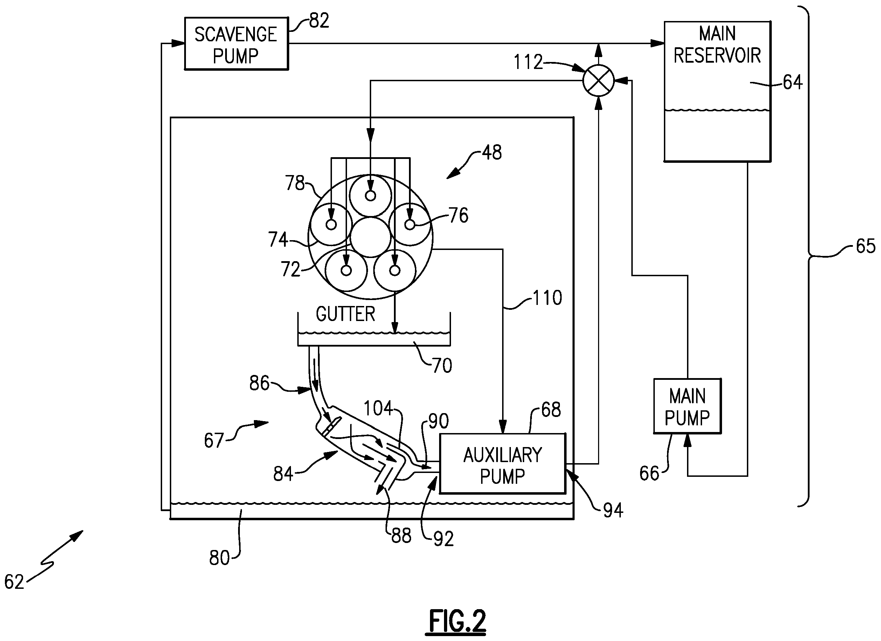

Referring to Figure 2 with continued reference to Figure 1, the example lubrication system 62 provides lubricant to the geared architecture 48. It should be understood that although lubrication of the geared architecture 48 is disclosed by way of example, other systems requiring lubricant are within the contemplation of this disclosure.

In this example, the geared architecture 48 comprises a sun gear 72 that drives a plurality of intermediate gears 74 that in turn drives a ring gear 78. Each of the intermediate gears 74 are supported for rotation by a bearing 76. In this example, the bearing 76 is a journal bearing that defines a bearing surface between the rotating gear and a fixed shaft. As appreciated, rotation of the intermediate gears 74 upon the bearing surfaces 76 in the absence of sufficient lubricant flow may have a detrimental effect to operation and result in premature wear. Accordingly, the auxiliary lubricant system 67 is provided to maintain a desired predetermined level of lubricant flow during all engine operating conditions regardless of the amount of lubricant that can be provided by the main lubrication system 65.

The auxiliary lubrication system 67 includes the auxiliary pump 68 that draws lubricant from a gutter 70. The gutter 70 captures lubricant that is exhausted from the geared architecture 48. A valve system 112 directs lubricant between the main lubrication system 65 and the auxiliary lubrication system 67 in response to the level of flow provided by the main lubrication system 65 and also may switch between systems responsive to detecting a specific engine operating condition.

The lubricant system 62 further includes a scavenge pump 82 that draws lubricant from a sump 80 and directs that lubricant back to the main reservoir 64.

The auxiliary system 67 is operational during instances where the main system flow is interrupted or where the engine may not be operating to drive the main pump 66 of the main lubrication system 65. During conditions where the main lubrication system flow is interrupted the engine may still be operating and driving the geared architecture, and during certain conditions where the engine is not operating, the fan section 22 (Figure 1) may be driven by air flow and thereby drive the geared architecture 48. Any rotation of the gears 74 within the geared architecture 48 in the absence of lubricant may have detrimental effects to the bearing 76. Accordingly, the auxiliary lubrication system 67 provides lubricant flow during times where the engine may be windmilling.

In this embodiment, the auxiliary pump 68 is driven through a mechanical link 110 with the geared architecture 48. Accordingly, in response to windmilling of the fan section 22 that drives the geared architecture 48, the auxiliary pump 68 will be driven such that lubricant flow can be maintained to the bearings 76. Other mechanisms to drive the auxiliary pump 68 in the absence of engine power may also be utilized and are within the contemplation of this disclosure.

Lubricant captured in the gutter 70 is directed through a deaerator 84 disposed before an inlet 92 of the auxiliary pump 68. Lubricant captured in the gutter 70 can include gases and air that can reduce the effectiveness of the lubricant supplied to the bearings 76. Accordingly, the deaerator 84 is provided between the gutter 70 and the inlet 92 of the auxiliary pump 68 for removing a substantial portion of gases and air from the lubricant. The deaerator 84 separates lubricant from any gases or air trapped therein.

In the disclosed example, lubricant and air mixture 86 is communicated to the deaerator 84. Lubricant 90 is then communicated to the inlet 92 of the auxiliary pump 68. Trapped gases such as air 88 are vented through an outlet 104 and away from the auxiliary pump 68. Air and gases trapped in the lubricant can also have a detrimental effect and reduce the effectiveness of the auxiliary pump 68. Accordingly, it is desirable to remove as much air and gases trapped in the liquid lubricant as is possible prior to the lubricant being communicated to the inlet 92. Accordingly, lubricant significantly void of any gases and air is exhausted through the pump outlet 94 to the valve assembly 112 and thereby to the bearing 76 of the geared architecture 48.

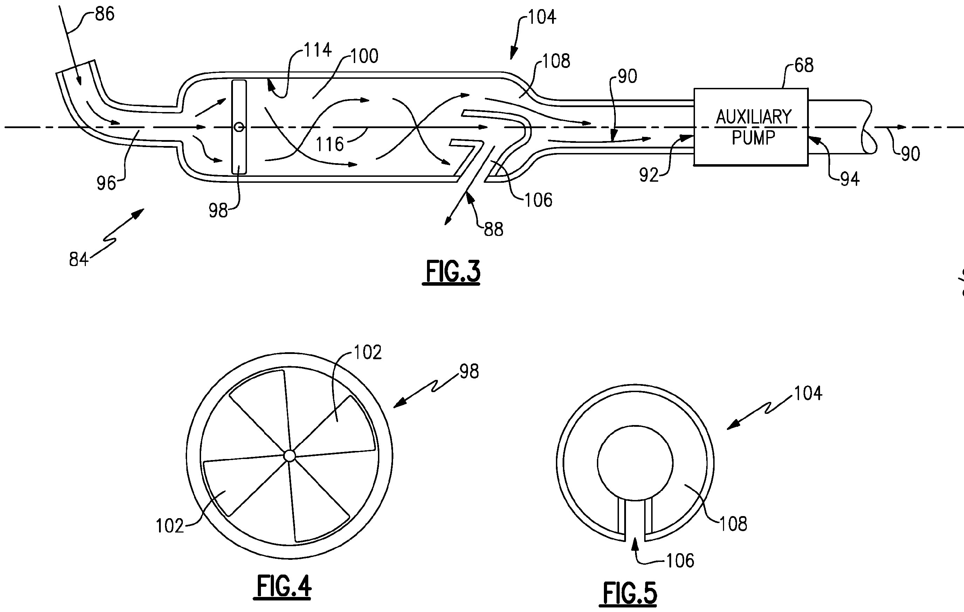

Referring to Figure 3 with continued reference to Figure 2, the example deaerator 84 includes an initial inlet 96 that receives lubricant and air mixture 86. The lubricant and air mixture 86 is initially flowed through a vane assembly 98 before entering a chamber 100.

Referring to Figure 4 with continued reference to Figure 3, the example vane assembly 98 includes a plurality of vanes 102 that extend radially outward within the deaerator 84. Each of the vanes 102 induces a swirl and/or radial flow component to the lubricant and air mixture 86. Accordingly, the lubricant and air mixture 86 is swirled by the vane assembly 98 and flows within the chamber 100 defined within the deaerator 84. The swirling flow generates centrifugal forces that drive the heavier liquid lubricant outward towards inner walls 114 of the chamber 100. The lighter air and gas component remains within a central portion of the chamber 100 disposed along a center line 116. The swirling and radial components of the liquid and gas mixture 86 provides for separation of the liquid lubricant from the air in other gases that may be trapped within the lubricant. The heavier lubricant is flung radially outward against the inner walls 114 of the chamber 100. The lubricant flow moves through the chamber 100 towards the outlet assembly 104. The outlet assembly 104 includes a first outlet 108 that is disposed radially outward of a central or second outlet 106.

Referring to Figure 5 with continued reference to Figure 3, the example outlet 104 includes the first outlet 108 for lubricant that is circumferentially and radially outward of the second outlet 106 for gases and air. The first outlet 108 receives the liquid lubricant that is traveling along the inner walls 114 of the chamber 100. The second outlet 106 is disposed substantially centrally within the chamber 100 such that air and other gases schematically indicated at 88 can be vented from the deaerator 84. As appreciated, vented gases 88 may include some lubricant but for the most part, the majority of liquid lubricant will be flung outward and proceed through the first outlet 108 that is disposed radially outward along the inner walls 114 of the chamber 100.

Accordingly, lubricant in the substantially liquid form without gas and air is communicated through a conduit 90 to the inlet 92 of auxiliary pump 68. Therefore, lubricant that is exhausted through the outlet 94 is substantially void of air in other gases and thereby provides the desired lubrication properties for lubricating and maintaining the bearing 76 in the geared architecture 48.

Referring to Figures 1, 2 and 3, the example disclosure includes a method of designing a lubrication system 62 for a fan drive gear system 48 that includes a first step of configuring a main lubricant system 65 for providing lubricant to at least one bearing surface 76 during a first engine operating condition. In this example, the first engine operating condition includes a condition where the main lubrication system 65 is being driven by active operation of the gas turbine engine.

The method further includes designing and configuring an auxiliary lubrication system 67 that communicates lubricant to at least one bearing surface 76 during a second engine operating condition. In this example, the second engine operating condition is a condition wherein the main lubricant system 65 is not providing lubricant at a flow rate above a desired threshold value to maintain lubrication of the example bearings 76. In this example, the second engine operating condition may also include an instance where the engine 20 is not operating but the fan 22 is rotating responsive to air flow through the bypass passage B. This condition is commonly understood and known as windmilling and will drive the geared architecture 48 such that lubrication of the bearings 76 is required.

The method further includes defining a deaerator 84 within the auxiliary lubricant system 67 between a source of captured lubricant such as the example gutter 70 and an auxiliary pump 68. The deaerator 84 provides for separating of lubricant from gases that may be trapped in the lubricant due to the capturing of the exhaust of lubricant from the geared architecture 48.

The method further includes defining the deaerator 84 to include a first outlet 108 for lubricant and a second outlet 106 for venting gases to provide for the separation of lubricant and air.

The method further includes defining the deaerator 84 to include a chamber 100 between a vane section 98 that induces swirl into the lubricant and gas mixture to drive the lubricant towards the outer walls 114 of the chamber 100, leaving the gas within an inner or central part of the chamber 100 for exhausting through the second outlet 106 that is radially inward of the first outlet 108 for lubricant.

## Claims

1. A lubrication system (62) for a fan drive gear system (48) of a turbofan engine (20) comprising:
a main lubrication system (65) including a main pump (66) to provide lubricant to the gear system (48); and
an auxiliary lubrication system (67) including an auxiliary pump (68) for communicating lubricant to bearings (76) of the gear system (48);
**characterised in that**:
the lubrication system (62) further comprises a deaerator (84) disposed between a lubricant source (70) and an inlet (92) of the auxiliary pump (68) for separating gases contained within the lubricant, the deaerator (84) including a vane section (98) for inducing a radial flow in the lubricant for separating gas (88) from the lubricant.

2. The system (62) as recited in claim 1, wherein the vane section (98) includes a plurality of vanes (102) extending radially outward transverse to a direction of lubricant flow for inducing a radial component to lubricant flow.

3. The system (62) as recited in claim 2, wherein the deaerator (84) comprises a conduit (90) including a chamber (100) between the vane section (98) and a first outlet (108) and a second outlet (106), wherein the radial flow component induced by the vane section (98) drives the lubricant against the inner walls (114) of the chamber (100) leaving the gas spaced apart from the inner walls (114).

4. The system (62) as recited in claim 3, wherein the radial flow in the lubricant comprises a swirl that drives heavier lubricant against inner walls (114) of the deaerator (84) and leaves the gas to flow about a central line (116) of the conduit (90).

5. The system (62) as recited in any preceding claim, including a gutter (70) capturing lubricant exhausted from the fan drive gear system (48), the gutter (70) in communication with the auxiliary pump (68) through the deaerator (84).

6. The system (62) as recited in any preceding claim, including a mechanical link (110) between a portion of the fan drive gear system (48) and the auxiliary pump (68) for driving the auxiliary pump (68).

7. The system (62) as recited in any preceding claim, including a valve assembly (112) for directing lubricant from the auxiliary pump (68) to at least one bearing (76) in response to a reduction in lubricant flow from a main lubricant system (65) below a predetermined flow rate.

8. A gas turbine engine (20) comprising:
a fan (22) including a plurality of fan blades (42) rotatable about an axis (A);
a gear system (48) driven by a turbine section (28) for rotating the fan (22) about the axis (A); and
a lubrication system (65) as recited in any preceding claim.

9. The gas turbine engine (20) or system (62) as recited in any preceding claim, wherein the deaerator (84) includes a first outlet (108) for lubricant disposed radially outside of a second outlet (106) for gas.

10. The gas turbine engine (20) or system (62) as recited in claim 9, wherein the second outlet (106) includes a vent that extends radially out of the deaerator (84) to exhaust gas.

11. The gas turbine engine (20) or system (62) as recited in any preceding claim, including a bearing (76) supporting at least one gear of the fan drive gear system or geared architecture (48), wherein the bearing (76) is in communication with an outlet (94) of the auxiliary pump (68) to receive lubricant.

12. A method of designing a lubrication system (62) for a fan drive gear system (48) of a turbofan engine (20) comprising:
configuring a main lubricant system (65) for providing lubricant to at least one bearing system (76) during a first engine operating condition; and
configuring an auxiliary lubricant system (67) for communicating lubricant to the at least one bearing surface (76) during a second engine operating condition, wherein during the second engine operating condition the main lubricant system (65) provides a lubricant flow below a desired lubricant flow rate threshold;
**characterised in that**:
the method further comprises defining a deaerator (84) within the auxiliary lubricant system (67) between a source of captured lubricant (70) and an inlet (92) of an auxiliary pump (68) for separating gases from the captured lubricant, the deaerator (84) including a vane section (98) for inducing a radial flow in the lubricant for separating gases from the lubricant.

13. The method as recited in claim 12, including defining the deaerator (84) to include a first outlet (108) for lubricant disposed radially outside of a second outlet (106) for gas, and configuring the second outlet (106) to include a vent that extends radially out of the deaerator (84) to exhaust gas.

14. The method as recited in claim 13, including configuring the deaerator (84) to define a conduit (90) including a chamber (100) between the vane section (98) and the first outlet (108) and the second outlet (106), wherein a radial flow component induced by the vane section (98) drives the lubricant against the inner walls (114) of
the chamber (100) leaving the gas spaced apart from the inner walls (114).

## Patentansprüche

1. Schmiersystem (62) für ein Lüfterantriebszahnradsystem (48) eines Mantelstromtriebwerks (20), umfassend:
ein Hauptschmiersystem (65), welches eine Hauptpumpe (66) beinhaltet, um ein Schmiermittel an das Zahnradsystem (48) bereitzustellen; und
ein Hilfsschmiersystem (67), welches eine Hilfspumpe (68) beinhaltet, um ein Schmiermittel an Lager (76) des Zahnradsystems (48) zu kommunizieren;
**dadurch gekennzeichnet, dass**:
das Schmiersystem (62) ferner einen Entlüfter (84) umfasst, welcher zwischen einer Schmiermittelquelle (70) und einem Einlass (92) der Hilfspumpe (68) angeordnet ist, um Gase abzuscheiden, welche in dem Schmiermittel enthalten sind, wobei der Entlüfter (84) einen Leitschaufelabschnitt (98) beinhaltet, um eine Radialströmung in dem Schmiermittel zu induzieren, um Gas (88) von dem Schmiermittel abzuscheiden.

2. System (62) nach Anspruch 1, wobei der Leitschaufelabschnitt (98) eine Vielzahl von Leitschaufeln (102) beinhaltet, welche sich quer zu einer Richtung eines Schmiermittelstroms radial nach außen erstrecken, um eine radiale Komponente in einem Schmiermittelstrom zu induzieren.

3. System (62) nach Anspruch 2, wobei der Entlüfter (84) eine Leitung (90) umfasst, welche eine Kammer (100) zwischen dem Leitschaufelabschnitt (98) und einem ersten Auslass (108) und einem zweiten Auslass (106) beinhaltet, wobei die Radialströmungskomponente, welche durch den Leitschaufelabschnitt (98) induziert wird, das Schmiermittel gegen die inneren Wände (114) der Kammer (100) antreibt, wodurch das Gas dazu veranlasst wird, von den inneren Wänden (114) beabstandet zu sein.

4. System (62) nach Anspruch 3, wobei die Radialströmung in dem Schmiermittel einen Strudel umfasst, welcher schwereres Schmiermittel gegen innere Wände (114) des Entlüfters (84) antreibt und das Gas dazu veranlasst, um eine Mittellinie (116) der Leitung (90) zu strömen.

5. System (62) nach einem der vorstehenden Ansprüche, welcher eine Abflussrinne (70) beinhaltet, welche Schmiermittel auffängt, welches von dem Lüfterantriebszahnradsystem (48) ausgestoßen wird, wobei die Abflussrinne (70) durch den Entlüfter (84) mit der Hilfspumpe (68) in Kommunikation steht.

6. System (62) nach einem der vorstehenden Ansprüche, beinhaltend eine mechanische Verbindung (110) zwischen einem Teil des Lüfterantriebsgetriebesystems (48) und der Hilfspumpe (68) zum Antreiben der Hilfspumpe (68).

7. System (62) nach einem der vorstehenden Ansprüche, beinhaltend eine Ventilbaugruppe (112) zum Leiten von Schmiermittel von der Hilfspumpe (68) zu mindestens einem Lager (76) als Reaktion auf ein Reduktion eines Schmiermittelstroms von einem Hauptschmiersystem (65) unter einer vorbestimmten Strömungsgeschwindigkeit.

8. Gasturbinentriebwerk (20), umfassend:
einen Lüfter (22), welcher eine Vielzahl von Lüfterlaufschaufeln (42) beinhaltet, welche drehbar um eine Achse (A) sind;
ein Zahnradsystem (48), welches durch einen Turbinenabschnitt (28) angetrieben wird, um den Lüfter (22) um die Achse (A) zu drehen; und
ein Schmiersystem (65) nach einem der vorstehenden Ansprüche.

9. Gasturbinentriebwerk (20) oder System (62) nach einem der vorstehenden Ansprüche, wobei der Entlüfter (84) einen ersten Auslass (108) für Schmiermittel beinhaltet, welcher radial außerhalb eines zweiten Auslasses (106) für Gas angeordnet ist.

10. Gasturbinentriebwerk (20) oder System (62) nach Anspruch 9, wobei der zweite Auslass (106) einen Abzug beinhaltet, welcher sich radial aus dem Entlüfter (84) heraus erstreckt, um Gas auszustoßen.

11. Gasturbinentriebwerk (20) oder System (62) nach einem der vorstehenden Ansprüche, beinhaltend ein Lager (76), welches mindestens ein Getriebe des Lüfterantriebszahnradsystem oder einer verzahnten Architektur (48) unterstützt, wobei das Lager (76) in Kommunikation mit einem Auslass (94) der Hilfspumpe (68) steht, um Schmiermittel zu empfangen.

12. Verfahren zum Entwerfen eines Schmiersystems (62) für ein Lüfterantriebszahnradsystem (48) eines Mantelstromtriebwerks (20), umfassend:
Konfigurieren eines Hauptschmiersystem (65), um mindestens einem Lagersystem (76) während eines ersten Triebwerksbetriebszustands Schmiermittel bereitzustellen; und
Konfigurieren eines Hilfsschmiersystems (67), um während eines zweiten Triebwerksbetriebszustands Schmiermittel an die mindestens eine Lagerfläche (76) zu kommunizieren,
wobei das Hauptschmiersystem (65) während des zweiten Triebwerksbetriebszustands einen Schmiermittelstrom unter einem gewünschten Schmiermittelstromgeschwindigkeitsschwellwert bereitzustellen;
**dadurch gekennzeichnet, dass**:
das Verfahren ferner ein Definieren eines Entlüfters (84) in dem Hilfsschmiersystem (67) zwischen einer Quelle von eingefangenem Schmiermittel (70) und einem Einlass (92) einer Hilfspumpe (68) umfasst, um Gase von dem eingefangenen Schmiermittel abzuscheiden, wobei der Entlüfter (84) einen Leitschaufelabschnitt (98) beinhaltet, um eine Radialströmung in dem Schmiermittel zu induzieren, um Gase von dem Schmiermittel abzuscheiden.

13. Verfahren nach Anspruch 12, welches ein Definieren des Entlüfter (84), um einen ersten Auslass (108) für Schmiermittel zu beinhalten, welches radial außerhalb eines zweiten Auslasses (106) für Gas angeordnet ist, und ein Konfigurieren des zweiten Auslasses (106) beinhaltet, einen Abzug zu beinhalten, welcher sich radial aus dem Entlüfter (84) heraus erstreckt, um Gas auszustoßen.

14. Verfahren nach Anspruch 13, welches ein Konfigurieren des Entlüfters (84) beinhaltet, um eine Leitung (90) zu definieren, welches eine Kammer (100) zwischen dem Leitschaufelabschnitt (98) und dem ersten Auslass (108) und dem zweiten Auslass (106) beinhaltet, wobei eine Radialströmungskomponente, welche durch den Leitschaufelabschnitt (98) induziert wird, das Schmiermittel gegen die inneren Wände (114) der Kammer (100) antreibt und das Gas dazu veranlasst, von den inneren Wänden (114) beabstandet zu sein.

## Revendications

1. Système de lubrification (62) pour un système d'engrenage d'entraînement de ventilateur (48) d'un turboréacteur (20) comprenant :
un système de lubrification principal (65) comportant une pompe principale (66) pour fournir du lubrifiant au système d'engrenage (48) ; et
un système de lubrification auxiliaire (67) comportant une pompe auxiliaire (68) pour communiquer le lubrifiant aux paliers (76) du système d'engrenage (48) ;
**caractérisé en ce que** :
le système de lubrification (62) comprend en outre un dégazeur (84) disposé entre une source de lubrifiant (70) et une entrée (92) de la pompe auxiliaire (68) pour séparer les gaz contenus dans le lubrifiant, le dégazeur (84) comportant une section d'aubes (98) pour induire un écoulement radial dans le lubrifiant afin de séparer le gaz (88) du lubrifiant.

2. Système (62) selon la revendication 1, dans lequel la section d'aubes (98) comporte une pluralité d'aubes (102) s'étendant radialement vers l'extérieur de façon transversale à une direction d'écoulement de lubrifiant pour induire un composant radial à l'écoulement de lubrifiant.

3. Système (62) selon la revendication 2, dans lequel le dégazeur (84) comprend un conduit (90) comportant une chambre (100) entre la section d'aubes (98) et une première sortie (108) et une seconde sortie (106), dans lequel le composant d'écoulement radial induit par la section d'aubes (98) entraîne le lubrifiant contre les parois internes (114) de la chambre (100) en laissant le gaz éloigné des parois internes (114).

4. Système (62) selon la revendication 3, dans lequel l'écoulement radial dans le lubrifiant comprend un tourbillon qui entraîne un lubrifiant plus lourd contre les parois internes (114) du dégazeur (84) et laisse le gaz s'écouler autour d'un axe central (116) du conduit (90).

5. Système (62) selon une quelconque revendication précédente, comportant une gouttière (70) capturant le lubrifiant évacué du système d'engrenage d'entraînement de ventilateur (48), la gouttière (70) étant en communication avec la pompe auxiliaire (68) à travers le dégazeur (84).

6. Système (62) selon une quelconque revendication précédente, comportant une liaison mécanique (110) entre une partie du système d'engrenage d'entraînement de ventilateur (48) et la pompe auxiliaire (68) pour entraîner la pompe auxiliaire (68).

7. Système (62) selon une quelconque revendication précédente, comportant un ensemble d'aubes (112) pour diriger le lubrifiant depuis la pompe auxiliaire (68) vers au moins un palier (76) en réponse à une réduction de l'écoulement de lubrifiant d'un système de lubrifiant principal (65) inférieur à un écoulement prédéterminé.

8. Moteur à turbine à gaz (20) comprenant :
un ventilateur (22) comportant une pluralité de pales de ventilateur (42) pouvant tourner autour d'un axe (A) ;
un système d'engrenage (48) entraîné par une section de turbine (28) pour faire tourner le ventilateur (22) autour de l'axe (A) ; et
un système de lubrification (65) selon une quelconque revendication précédente.

9. Moteur à turbine à gaz (20) ou système (62) selon une quelconque revendication précédente, dans lequel le dégazeur (84) comporte une première sortie (108) pour le lubrifiant disposée radialement à l'extérieur d'une seconde sortie (106) pour le gaz.

10. Moteur à turbine à gaz (20) ou système (62) selon la revendication 9, dans lequel la seconde sortie (106) comporte un évent qui s'étend radialement hors du dégazeur (84) pour évacuer du gaz.

11. Moteur à turbine à gaz (20) ou système (62) selon une quelconque revendication précédente, comportant un palier (76) supportant au moins un engrenage du système d'engrenage d'entraînement de ventilateur ou de l'architecture à engrenages (48), dans lequel le palier (76) est en communication avec une sortie (94) de la pompe auxiliaire (68) pour recevoir du lubrifiant.

12. Procédé de conception d'un système de lubrification (62) pour un système d'engrenage d'entraînement de ventilateur (48) d'un turboréacteur (20) comprenant :
la configuration d'un système de lubrifiant principal (65) pour fournir du lubrifiant à au moins un système de palier (76) pendant une première condition de fonctionnement du moteur ; et
la configuration d'un système de lubrifiant auxiliaire (67) pour communiquer du lubrifiant à au moins une surface de palier (76) pendant une seconde condition de fonctionnement du moteur ; et
dans lequel, pendant la seconde condition de fonctionnement du moteur, le système de lubrifiant principal (65) fournit un écoulement de lubrifiant inférieur à un seuil d'écoulement de lubrifiant souhaité ;
**caractérisé en ce que** :
le procédé comprend en outre la définition d'un dégazeur (84) dans le système de lubrifiant auxiliaire (67) entre une source de lubrifiant capturé (70) et une entrée (92) d'une pompe auxiliaire (68) pour séparer les gaz du lubrifiant capturé, le dégazeur (84) comportant une section d'aubes (98) pour induire un écoulement radial dans le lubrifiant afin de séparer les gaz du lubrifiant.

13. Procédé selon la revendication 12, comportant la définition du dégazeur (84) pour inclure une première sortie (108) pour le lubrifiant disposée radialement à l'extérieur d'une seconde sortie (106) pour le gaz, et la configuration de la seconde sortie (106) pour inclure un évent qui s'étend radialement hors du dégazeur (84) pour évacuer du gaz.

14. Procédé selon la revendication 13, comportant la configuration du dégazeur (84) pour définir un conduit (90) comportant une chambre (100) entre la section d'aubes (98) et la première sortie (108) et la seconde sortie (106), dans lequel un composant d'écoulement radial induit par la section d'aubes (98) entraîne le lubrifiant contre les parois internes (114) de la chambre (100) en laissant le gaz éloigné des parois internes (114) .
